# EUROPÄISCHE PATENTSCHRIFT

(11) **EP 1 293 082 B1**
(45) Veröffentlichungstag und Bekanntmachung des Hinweises auf die Patenterteilung: **13.09.2006**
(21) Anmeldenummer: 01933625.4
(22) Anmeldetag: 24.04.2001
(51) Int. Cl.: H04L 29/14, B60R 16/02

(54) **VERFAHREN ZUM BEHANDELN VON EINEM FEHLERHAFTEN GERÄT IN EINEM FAHRZEUGKOMMUNIKATIONSNETZ**
METHOD FOR TREATING A DEFECTIVE DEVICE IN A VEHICLE COMMUNICATIONS NETWORK
PROCEDE POUR TRAITER UN APPAREIL DEFECTUEUX DANS UN RESEAU DE COMMUNICATION DE VEHICULE

(30) Priorität: 02.06.2000 DE 10027362
(43) Veröffentlichungstag der Anmeldung: 19.03.2003
(73) Patentinhaber: ROBERT BOSCH GMBH, 70442 Stuttgart (DE)
(72) Erfinder: VOLLMER, Vasco, 31188 Holle (DE); HOFMANN, Matthias, 01705 Freital (DE)
(86) Internationale Anmeldenummer: PCT/DE2001/001541
(87) Internationale Veröffentlichungsnummer: WO 2001/092045

(56) Entgegenhaltungen:
- DE-A- 19 833 462
- DE-C- 4 113 759
- US-A- 4 926 352
- US-A- 5 633 857
- PATENT ABSTRACTS OF JAPAN vol. 015, no. 292 (P-1230), 24. Juli 1991 (1991-07-24) & JP 03 100836 A (NEC CORP), 25. April 1991 (1991-04-25)
- PATENT ABSTRACTS OF JAPAN vol. 1996, no. 04, 30. April 1996 (1996-04-30) & JP 07 325730 A (FUJI XEROX CO LTD), 12. Dezember 1995 (1995-12-12)

## Beschreibung

### Stand der Technik

Die Erfindung geht aus von einem Verfahren und von einem System zum Behandeln von einem fehlerhaften Gerät in einem Fahrzeugkommunikationsnetz nach der Gattung der unabhängigen Patentansprüche.

Es ist bereits bekannt, in einem Kraftfahrzeug Fahrzeugkommunikationsnetze einzusetzen, wobei mittels Treibern für die einzelnen Geräte, die an das Fahrzeugkommunikationsnetz angeschlossen sind, diese einzelnen Geräte gesteuert werden. Die Treiber werden in einer Datenbank verwaltet. Das Patent DE 41 13759 C1 (veröffentlicht am 12. November 1992) offenbart ein Verfahren zum Testen der Komponenten eines kommunikationsystems. Alle Testarten (z.B. Routinetest und Diagnosetest) werden mit Hilfe einer Testprozedurtabelle durch ein einziges Testprogramm bewirkt.

### Vorteile der Erfindung

Das erfindungsgemäße Verfahren und System zum Behandeln von einem fehlerhaften Gerät in einem Fahrzeugkommunikationsnetz mit den Merkmalen des unabhängigen Patentanspruchs hat demgegenüber den Vorteil, dass eine automatisierte Fehlerbehandlung eintritt, wenn ein Gerät defekt, abgeschaltet oder vom Fahrzeugkommunikationsnetz entfernt wird. Dies vermeidet vorteilhafterweise eine Störung des Betriebs des Fahrzeugkommunikationsnetzes. Durch die erfindungsgemäße systematisierte Vorgehensweise wird eine dem fehlerhaften Gerät entsprechende Fehlerbeseitungsmaßnahme eingeleitet.

Durch die in den abhängigen Ansprüchen aufgeführten Maßnahmen und Weiterbildungen sind vorteilhafte Verbesserungen des im unabhängigen Patentanspruch angegebenen Verfahrens und System zum Behandeln von einem fehlerhaften Gerät in einem Fahrzeugkommunikationsnetz möglich.

Besonders vorteilhaft ist, dass, wenn das fehlerhafte Gerät auf ein Testsignal nicht antwortet, wenigstens einmal erneut dieses Testsignal gesendet wird, und dass, wenn dann das fehlerhafte Gerät erneut keine Reaktion zeigt, das fehlerhafte Gerät vom Fahrzeugkommunikationsnetz entfernt wird, indem ein Eintrag in der Datenbank des Fahrzeugkommunikationsnetzes für das fehlerhafte Gerät in der Art verändert wird, dass dieses fehlerhafte Gerät als entfernt markiert wird. Vorteilhafterweise wird dann auch gegebenenfalls ein Signal an das fehlerhafte Gerät gesendet, dass es sich abschaltet. Diese vorteilhafte Weiterbildung verhindert, dass mit sehr großer Wahrscheinlichkeit überprüft wird, ob das fehlerhafte Gerät noch in der Lage ist, auf das Testsignal zu antworten oder nicht. Ist es nicht dazu in der Lage, dann kann das Fahrzeugkommunikationsnetz keine andere automatische Fehlerbehandlung durchführen, als nur das fehlerhafte Gerät abzuschalten.

Weiterhin ist es von Vorteil, dass, wenn das fehlerhafte Gerät auf das Testsignal mit einem Fehlercode antwortet, ein Neustart des fehlerhaften Geräts erzwungen wird und dass nach dem Neustart das Testsignal erneut gesendet wird und wenn dann wiederum der Fehlercode von dem fehlerhaften Gerät als Reaktion auf das Testsignal gesendet wird, dann wird das fehlerhafte Gerät abgeschaltet. Dies ermöglicht vorteilhafterweise eine automatisierte Fehlerbehandlung, wobei durch einen Neustart des als fehlerhaft erkannten Geräts versucht wird, den Fehler zu beseitigen. Hilft dies nicht, dann wird vorteilhafterweise dieses Gerät aus dem Fahrzeugkommunikationsnetz in der oben beschriebenen Weise entfernt.

Darüber hinaus ist es von Vorteil, dass der Busmanager den anderen Geräten, die an das Fahrzeugkommunikationsnetz angeschlossen sind, mitteilt, dass das fehlerhafte Gerät von dem Fahrzeugkommunikationsnetz entfernt wurde. Damit wird ausgeschlossen, dass die anderen Geräte versuchen, auf das entfernte und fehlerhafte Gerät zuzugreifen. Dies vermeidet vorteilhafterweise Fehlfunktionen und unnötigen Datenverkehr auf dem Fahrzeugkommunikationsnetz.

Dabei ist es weiterhin von Vorteil, dass der Busmanager auf einem Gerät des Fahrzeugkommunikationsnetzes installiert ist, wobei dieses Gerät auch gegebenenfalls andere Funktionen neben dem Busmanager übernehmen kann.

Darüber hinaus ist es von Vorteil, dass die einzelnen Geräte, die an das Fahrzeugkommunikationsnetz angeschlossen sind, klassifiziert werden. Diese Klassifikation richtet sich nach einer Sicherheitsstufe, die den Zugriff auf andere Geräte regelt. Dabei wird vorteilhafterweise unterschieden, ob ein Gerät Treiber laden darf, ob ein Gerät gerätespezifische und erweiterte Treiber laden darf und ob ein Gerät darüber hinaus die Treiber verwenden kann, um eine Fehlerbehandlung durchzuführen. Damit wird ein unberechtigter Zugriff auf Geräte verhindert. Dies ist insbesondere im Lichte des Zugriffs von außen auf das Kommunikationsnetz zu sehen. Ein Fahrzeugkommunikationsnetz kann eine Funkschnittstelle aufweisen, die den Zugriff von außen ermöglicht. Durch die Klassifikation kann vorteilhafterweise verhindert werden, dass ein Gerät, das von außen auf das Kommunikationsnetz über die Funkschnittstelle zugreift, keine Sicherheitsstufe aufweist, die eine Fehlerbehandlung ermöglicht. Auch der Zugriff für ein von außen an das Fahrzeugkommunikationsnetz angeschlossenes Gerät kann durch die Klassifizierung vorteilhafterweise beschränkt sein.

Weiterhin ist es von Vorteil, dass Geräte vorliegen, die die erfindungsgemäße Fehlerbehandlung durchführen können, und dass ein Gerät einen Fehlercode abgibt, falls es auch ein Testsignal reagieren soll, und es einen eigenen Fehler festgestellt hat.

### Zeichnung

Ausführungsbeispiele der Erfindung sind in der Zeichnung dargestellt und werden in der nachfolgenden Beschreibung näher erläutert. Es zeigt Figur 1 ein Fahrzeugkommunikationsnetz, Figur 2 das erfindungsgemäße Verfahren zum Behandeln von einem fehlerhaften Gerät in einem Fahrzeugkommunikationsnetz, Figur 3 die Fehlerbehandlung durch den Busmanager und Figur 4 die Fehlerbehandlung durch ein beliebiges Gerät des Fahrzeugkommunikationsnetzes, das nicht der Busmanager ist.

### Beschreibung

In der Kraftfahrzeugindustrie werden zunehmend Multimediakomponenten in ein Fahrzeug integriert. Die Multimediakomponenten sind dabei häufig über einen Bus, also ein Fahrzeugkommunikationsnetz, miteinander verbunden. Durch die Verwendung von Treibern zur Steuerung von Geräten, die an das Fahrzeugkommunikationsnetz angeschlossen sind, ist es möglich, dass einige Geräte, die andere Geräte steuern, diese Treiber entweder selbst aufweisen oder von einer Datenbank bei Bedarf laden. Dadurch ist es möglich, dass Fahrzeugkommunikationsnetze unterschiedlicher Komplexität aufgebaut werden können. Fällt nun ein Gerät des Fahrzeugkommunikationsnetzes aus, oder es wird von dem Fahrzeugkommunikationsnetz physisch entfernt oder abgeschaltet, dann ist zu gewährleisten, dass der Betrieb des Fahrzeugkommunikationsnetzes weiterhin normal läuft.

Erfindungsgemäß wird daher ein Verfahren vorgestellt, mit dem auf ein Fehlverhalten eines Geräts des Fahrzeugkommunikationsnetzes reagiert wird. Durch die Verwendung eines erweiterten gerätespezifischen Treibers mit Diagnosefunktionen für ein fehlerhaftes Gerät wird ermittelt, welche Fehlerbeseitigungsmaßnahme jeweils eingeleitet werden muß. Erfindungsgemäße Fehlerbeseitigungsmaßnahmen sind ein Abschalten des Geräts oder ein Neustart des fehlerhaften Geräts. Wenn ein Gerät physisch von dem Fahrzeugkommunikationsnetz entfernt wurde, dann wird allein der Eintrag für dieses entfernte Gerät ais der Datenbank gelöscht. Es liegt in diesem Fall also keine Fehlerbeseitigungsmaßnahme vor, sondern nur ein Anpassen der Datenbankeinträge. Das Entfernen eines Geräts wird von dem Busmanager des Fahrzeugkommunikationsnetzes den anderen Geräten des Fahrzeugkommunikationsnetzes mitgeteilt. Durch eine Klassifizierung der einzelnen Geräte des Fahrzeugkommunikationsnetzes ist es möglich, dass nur bestimmte Geräte den erweiterten gerätespezifischen Treiber mit Diagnosefunktionen laden können, um die Fehlerbehandlung des fehlerhaften Geräts durchzuführen.

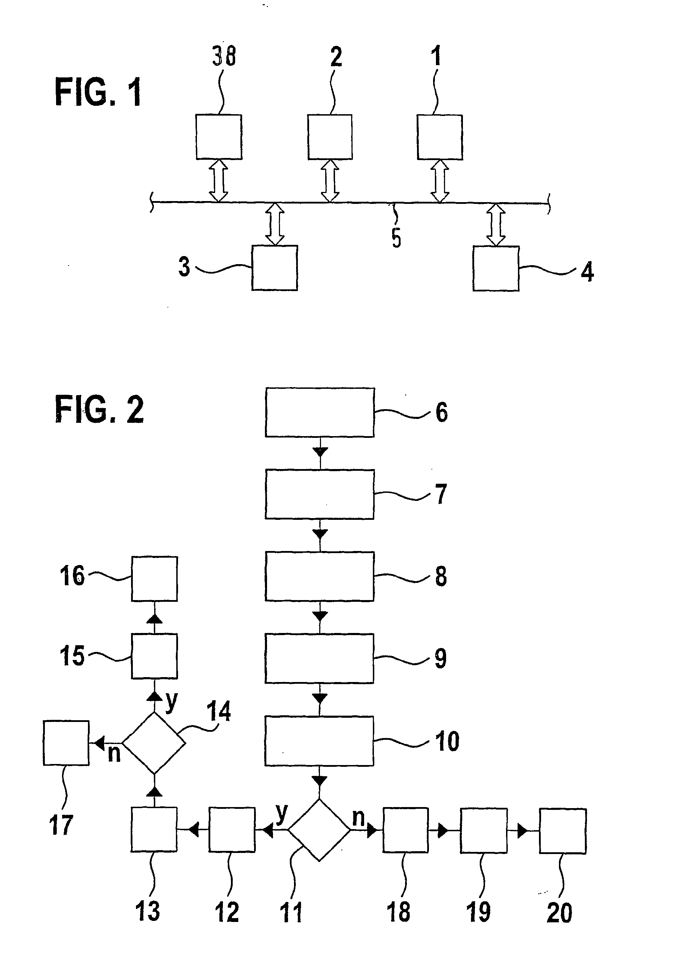

In Figur 1 ist als Blockschaltbild ein Fahrzeugkommunikationsnetz dargestellt. Ein Busmanager 1 ist über einen Datenein-/-ausgang mit einem ersten Datenein-/-ausgang einer Steuereinheit 2 verbunden. Ein zweiter Datenein-/-ausgang der Steuereinheit 2 ist an einen Bus 5 angeschlossen. An den Bus 5 sind jeweils über Datenein-/ausgänge ein CD-Spieler 3 und ein Lautsprecher mit Audioverstärker 4 angeschlossen. Alle Geräte weisen Buscontroller auf, um Daten über den Bus 5 zu übertragen. Alternativ ist es möglich, dass mehr Geräte an den Bus 5 angeschlossen werden können. Bei dem Bus 5 handelt es sich hier um einen Multimediabus, der beispielsweise der MOST-Bus sein kann.

In Figur 2 ist das erfindungsgemäße Verfahren zum Behandeln von einem fehlerhaften Gerät in einem Fahrzeugkommunikationsnetz als Flußdiagramm dargestellt. In Verfahrensschritt 6 steuert die Steuereinheit 2 den CD-Spieler 3 und den Lautsprecher 4 mit Audioverstärker. Die Steuereinheit 2 wird über eine Eingabeeinrichtung von dem Fahrer oder einem Beifahrer aktiviert, um den CD-Spieler 3 zu veranlassen, eine Compact-Disc abzuspielen. Dazu weist die Steuereinheit 2 einen Treiber zur Steuerung des CD-Spielers 3 auf. Der Treiber weist alle Funktionalitäten auf, die mit dem CD-Spieler 3 möglich sind. Dazu gehört Abspielen von einzelnen Titeln, Abspeichern einer Gruppe von Titeln, die dann abgespielt werden kann, Pause, Replay oder ein zufälliges Abspielen von Titeln hintereinander. Daneben sind mit der Steuereinheit 2 auch mechanische Funktionen steuerbar wie das Ein- und Ausführen der Compact-Disc. Der CD-Spieler 3 weist einen Treiber auf, um den Lautsprecher mit Audioverstärker 4 zu steuern. Damit ist es möglich, dass die Wiedergabe der digitalen Audiodaten, die von der Compact-Disc geladen werden, ermöglicht wird.

In Verfahrensschritt 7 zeigt nun der CD-Spieler 3 eine Fehlfunktion, indem er auf ein Steuersignal der Steuereinheit 2 nicht mehr reagiert. Solch ein Steuersignal lässt beispielsweise den Titel mit der Track-Nummer 3 von der eingelegten CD abspielen.

In Verfahrensschritt 8 erkennt dies die Steuereinheit 2 und überträgt zu dem Busmanager 1 eine Fehlermeldung. Der Busmanager 1 lädt daraufhin von der Datenbank 38 einen erweiterten gerätespezifischen Treiber für den CD-Spieler 3 mit Diagnosefunktionen. Dies wird in Verfahrensschritt 9 durchgeführt. Der Busmanager 1 führt daher die Fehlerbehandlung durch. Alternativ ist es möglich, dass auch die Steuereinheit 2 oder eine andere Einheit, die an den Bus 5 als das Fahrzeugkommunikationsnetz angeschlossen ist, die Fehlerbehandlung durchführt.

In Verfahrensschritt 10 erzeugt der Busmanager 1 mittels des erweiterten gerätespezifischen Treibers mit Diagnosefunktionen ein Testsignal, das der Busmanager 1 zu dem CD-Spieler 3 sendet. In Verfahrensschritt 11 wird die Antwort auf dieses Testsignal von dem CD-Spieler 3 überprüft. Handelt es sich um einen bekannten Fehlercode, den der CD-Spieler 3 zu dem Busmanager 1 zurücksendet, dann wird in Verfahrensschritt 12 ein Neustart des CD-Spielers 3 durchgeführt. Dies veranlasst der Busmanager 1 mittels eines bekannten Kommandos, das über den Bus 5 gesendet wird. In Verfahrensschritt 13 wird dann erneut vom Busmanager 1 das Testsignal zu dem CD-Spieler 3 versendet. In Verfahrensschritt 14 wird die Antwort auf das erneute Versenden des Testsignals ausgewertet. Wird erneut der Fehlercode von dem CD-Spieler 3 zu dem Busmanager 1 als Antwort auf das Testsignal gesendet, dann wird in Verfahrensschritt 15 der CD-Spieler 3 mittels eines entsprechenden Kommandos abgeschaltet. In Verfahrensschritt 16 wird in der Datenbank 38 der Eintrag für den CD-Spieler 3 als entfernt eingetragen. Der Busmanager 1 versendet dann eine Nachricht im Broadcast-Modus an alle an den Bus 5 angeschlossenen Geräte, mit der Mitteilung dass der CD-Spieler 3 von dem Bus 5 entfernt wurde.

Wurde in Verfahrensschritt 14 festgestellt, dass der CD-Spieler 3 nicht mit einem Fehlercode auf das Testsignal geantwortet hat, dann wird in Verfahrensschritt 17 der Normalbetrieb wieder aufgenommen. Damit kann dann die Steuereinheit 2 erneut den CD-Spieler 3 steuern. Der Busmanager 1 löscht dann den erweiterten gerätespezifischen Treiber, um seine Ressourcen freizuhalten. Der Normalbetrieb wird in Verfahrensschritt 17 jedoch nur aufgenommen, wenn der CD-Spieler 3 mit einem korrekten Code auf das Testsignal antwortet. Antwortet der CD-Spieler 3 überhaupt nicht, dann wird in Verfahrensschritt 17 der CD-Spieler 3 abgeschaltet, falls dies möglich ist. Ist das nicht der Fall, dann ist anzunehmen, dass der CD-Spieler 3 von dem Fahrzeugkommunikationsnetz 5 entfernt wurde. Das Abschalten wird dann auch von dem Busmanager 1 allen anderen Geräten mitgeteilt und der entsprechende Eintrag für den CD-Spieler 3 wird in der Datenbank 38 als entfernt markiert.

Wurde in Verfahrensschritt 11 festgestellt, dass der CD-Spieler 3 nicht mit einem Fehlercode auf das Testsignal geantwortet hat, dann liegt kein Fehler vor, der durch einen Neustart korrigiert werden kann. Daher wird in Verfahrensschritt 18 von dem Busmanager 1 an den CD-Spieler 3 die Meldung versandt, das Gerät abzuschalten, um dann in Verfahrensschritt 19 in der Datenbank 38 den Eintrag für den CD-Spieler 3 als entfernt zu markieren. In Verfahrensschritt 20 wird der Normalbetrieb aufgenommen, wobei der Busmanager 1 allen anderen Geräten mitteilt, dass der CD-Spieler 3 nicht mehr an den Bus 5 angeschlossen ist. Antwortet der CD-Spieler 3 nicht auf das Testsignal, dann ist es auch möglich, dass der CD-Spieler 3 von dem Bus 5 bereits entfernt wurde. Da die Reaktion auf das Ausschaltsignal von dem Busmanager 1 auf den CD-Spieler 3 nicht überprüft wird, ist auch dieser Fall hier mit abgedeckt. Denn entweder wird der CD-Spieler 3 nach Verfahrensschritt 18 abgeschaltet, oder er ist bereits abgeschaltet. Das Ergebnis ist dasselbe.

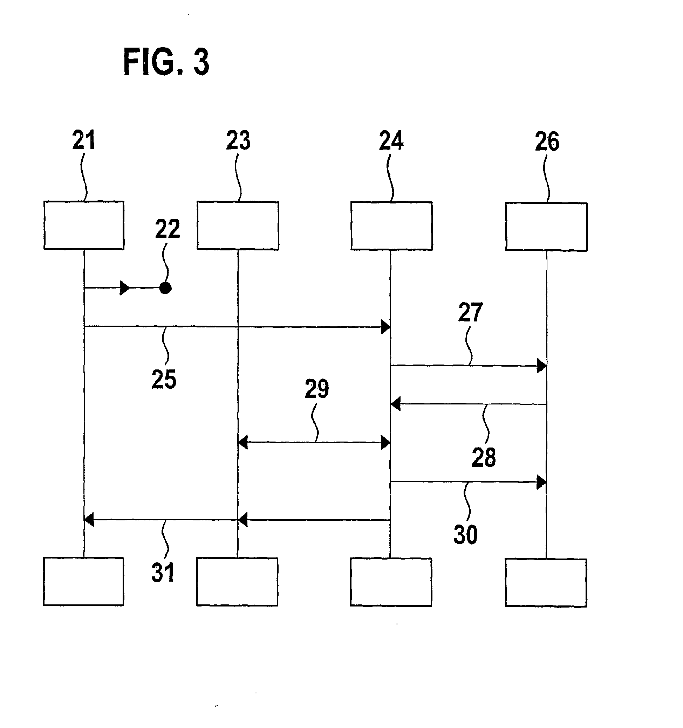

In Figur 3 ist die Fehlerbehandlung durch den Busmanager 1 als zeitliche Abfolge von gesendeten Meldungen dargestellt. Ein steuerndes Gerät 21, wie oben dargestellt die Steuereinheit 2, versendet eine Meldung 22 an das zu steuernde Gerät 23, den CD-Spieler 3. Auf die Meldung 22 antwortet das zu steuernde Gerät 23 nicht. Daher wird dann von dem steurenden Gerät 21 eine Fehlermeldung 25 an den Busmanager 24 versendet. Der Busmanager 24, dem mit der Fehlermeldung 25 der Gerätecode des zu steuernden Geräts 23 übermittelt wurde, fordert daraufhin von einer Datenbank 26 mit der Meldung 27 den erweiterten gerätespezifischen Treiber mit Diagnosefunktionen für das Gerät 23 an. Mit der Meldung 28 wird von der Datenbank 26 dem Busmanager 24 dieser Treiber übertragen. In dem Schritt 29 führt der Busmanager 24 die oben dargestellte Fehlerbehandlung durch. Mit der Meldung 30 übermittelt der Busmanager 24 der Datenbank 26 den Fehlerbericht, mittels dessen die Datenbank 26 gegebenenfalls das zu steuernde Gerät 23 als entfernt markiert. Mit der Meldung 31 versendet der Busmanager 24 dann an alle anderen Geräte, die an das Fahrzeugkommunikationsnetz angeschlossen sind, die Meldung, dass das Gerät 23 entfernt wurde oder den Normalbetrieb wieder aufgenommen hat.

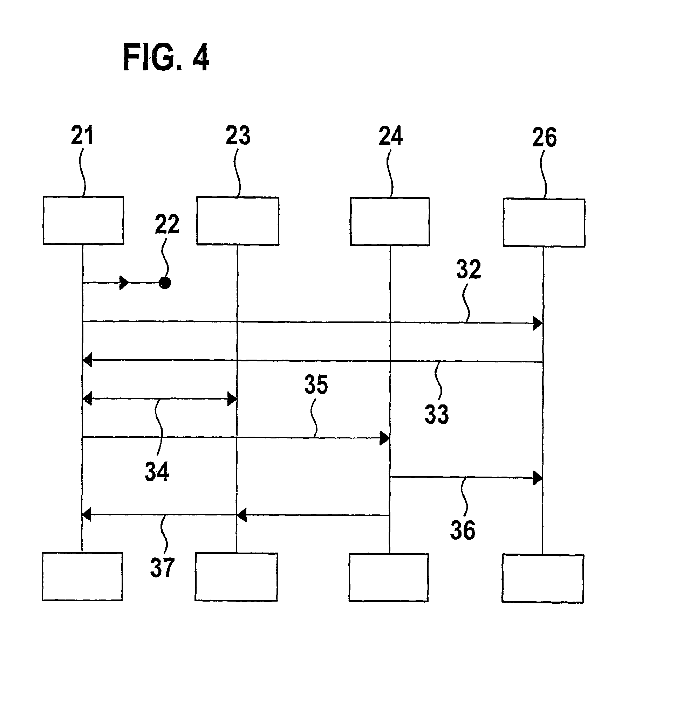

In Figur 4 ist dargestellt wie das steuernde Gerät 21 die Fehlerbehandlung selbst durchführt. Wiederum sendet das steuernde Gerät die Meldung 22 auf die das zu steuernde Gerät 23 nicht reagiert. Daraufhin fordert das zu steuernde Gerät von der Datenbank 26 den erweiterten Treiber mit Diagnosefunktionen für das zu steuernde Gerät 23 an. Mit der Meldung 33 wird eben dieser Treiber von der Datenbank 26 dem steuernden Gerät 21 übertragen. In Verfahrensschritt 34 wird dann die Fehlerbehandlung wie oben dargestellt (Figur 2) durchgeführt. Mit der Meldung 35 wird ein Fehlerbericht an den Busmanager 24 übertragen. Mit der Meldung 36 überträgt dann der Busmanager 24 an die Datenbank 26 den entsprechenden Fehlerbericht. Da in diesem Beispiel das Gerät 23 aus dem Fahrzeugkommunikationsnetz entfernt wurde, wird mit der Meldung 37 allen anderen Geräten mitgeteilt, dass eben dies geschehen ist. Alternativ ist es möglich, dass der Busmanager 24 mit der Meldung 37 den anderen Geräten mitteilt, dass das Gerät 23 wieder im Normalbetrieb läuft.

Nachfolgend ist dargestellt, wie beispielhaft die Geräte klassifiziert werden können. Dabei wird den einzelnen Geräten eine entsprechende Sicherheitsstufe zugewiesen. Die niedrigste Sicherheitsstufe sind solche Geräte, die keine Treiber laden können und keine Fehlerbehandlung durchführen können. Das sind beispielsweise Geräte, die allein gesteuert werden können und die selbst keine Steuerfunktionen ausführen. Die nächste Sicherheitsstufe weist Geräte auf, die Treiber laden können, wobei diese Treiber allein Standardtreiber sind, also keine gerätespezifischen Treiber. Weiterhin können diese Geräte auch keine Fehlerbehandlung durchführen. In der nächstfolgenden Klasse sind Geräte, die Standardtreiber und gerätespezifischen Treiber verwenden und laden können, aber keine Fehlerbehandlung. In der letzten Klasse sind die Geräte mit der höchsten Sicherheitsstufe. Diese Geräte können alle Treiber laden und auch eine Fehlerbehandlung durchführen. Ein Gerät, das von außen auf das Fahrzeugkommunikationsnetz zugreift und sich in das Fahrzeugkommunikationsnetz integriert, wird nicht die Fehlerbehandlungsfunktion erhalten, um unberechtigte Zugriffe zu vermeiden. Dies wird z.B. nur besonderen Geräten, die allein Technikern zur Verfügung stehen, zugewiesen werden.

## Patentansprüche

1. Verfahren zum Behandeln von einem fehlerhaften Gerät in einem Fahrzeugkommunikationsnetz (5), wobei Geräte, die an das Fahrzeugkommunikationsnetz (5) angeschlossen sind, mittels gerätespezifischer Treiber gesteuert werden, wobei die gerätespezifischen Treiber in einer Datenbank (38), die an das Fahrzeugkommunikationsnetz (5) angeschlossen ist, abgelegt sind, **dadurch gekennzeichnet, dass**, wenn ein erstes Gerät auf ein von einem zweiten Gerät gesendetes Signal fehlerhaft reagiert, von dem zweiten Gerät oder einem weiteren Gerät ein erweiterter gerätespezifischer Treiber mit Diagnosefunktionen für das erste Gerät von der Datenbank (38) geladen wird, dass mittels des erweiterten gerätespezifischen Treibers ein Testsignal zu dem ersten Gerät über das Fahrzeugkommunikationsnetz (5) gesendet wird und dass in Abhängigkeit von der Reaktion auf das Testsignal eine Fehlerbeseitigungsmaßnahme gegebenenfalls eingeleitet wird.

2. Verfahren nach Anspruch 1, **dadurch gekennzeichnet, dass**, wenn das erste Gerät auf das Testsignal nicht antwortet, wenigstens einmal erneut ein Testsignal gesendet wird und dass, wenn das erste Gerät erneut keine Reaktion zeigt, als die Fehlerbeseitigungsmaßnahme das erste Gerät von dem Fahrzeugkommunikationsnetz (5) entfernt wird, indem der Eintrag für das erste Gerät in der Datenbank (38) als entfernt markiert wird und gegebenenfalls ein Signal an das erste Gerät gesendet wird, um es abzuschalten.

3. Verfahren nach Anspruch 1 oder 2, **dadurch gekennzeichnet, dass**, wenn das erste Gerät einen Fehlercode als die Reaktion auf das Testsignal sendet, von dem zweiten oder dem weiteren Gerät als die Fehlerbeseitigungsmaßnahme ein Neustart des ersten Geräts und gegebenenfalls aller weiteren an das Fahrzeugkommunikationsnetz (5) angeschlossenen Geräte ausgeführt wird und dass, wenn das erste Gerät nach dem Zurücksetzen weiterhin den Fehlercode als die Reaktion auf das Testsignal sendet, das erste Gerät abgeschaltet wird.

4. Verfahren nach Anspruch 2 oder 3, **dadurch gekennzeichnet, dass**, wenn das erste Gerät abgeschaltet wird, ein Busmanager (1) des Fahrzeugkommunikationsnetzes (5) das Abschalten des ersten Geräts den übrigen Geräten des Fahrzeugkommunikationsnetzes (5) mitteilt.

5. Verfahren nach Anspruch 4, **dadurch gekennzeichnet, dass** der Busmanager (1) auf einem Gerät installiert wird, das an das Fahrzeugkommunikationsnetz (5) angeschlossen ist.

6. Verfahren nach einem der vorhergehenden Ansprüche, **dadurch gekennzeichnet, dass** die Geräte, die an das Fahrzeugkommunikationsnetz (5) angeschlossen sind, klassifiziert werden, indem jedem Gerät eine Sicherheitsstufe zugewiesen wird, die jeweils den Zugriff auf andere Geräte regelt.

7. System zum Behandeln von einem fehlerhaften Gerät in einem Fahrzeugkommunikationsnetz (5), wobei Geräte an das Fahrzeugkommunikationsnetz angeschlossen sind, wobei die Geräte durch gerätespezifische Treiber steuerbar sind, die in einer Datenbank (38) abgelegt sind, die an das Fahrzeugkommunikationsnetz (5) angeschlossen ist, **dadurch gekennzeichnet, dass** das System eingerichtet ist für den Fall, dass das erste Gerät auf ein von einem zweiten Gerät gesendetes Signal fehlerhaft reagiert, von dem zweiten Gerät oder einem weiteren Gerät einen erweiterten gerätespezifischen Treiber mit Diagnosefunktionen für das erste Gerät von der Datenbank (38) zu laden, wobei dieser erweiterte gerätespezifische Treiber eingerichtet ist ein Testsignal zu dem ersten Gerät über das Fahrzeugkommunikationsnetz (5) zu senden und dass das System eingerichtet ist in Abhängigkeit von der Reaktion auf das Testsignal eine Fehlerbeseitigungsmaßnahme gegebenenfalls einzuleiten.

## Claims

1. Method for treating a defective device in a vehicle communications network (5), devices which are connected to the vehicle communications network (5) being controlled by means of device-specific drivers, the device-specific drivers being stored in a database (38) which is connected to the vehicle communications network (5), **characterized in that** if a first device reacts incorrectly to a signal which is transmitted by a second device, an expanded device-specific driver with diagnostic functions for the first device is loaded from the database (38) from the second device or a further device, **in that** a test signal is transmitted to the first device via the vehicle communications network (5) by means of the expanded, device-specific driver, and **in that** a troubleshooting measure is, if appropriate, initiated as a function of the reaction to the test signal.

2. Method according to Claim 1, **characterized in that** if the first device does not respond to the test signal, a test signal is transmitted again at least once, and **in that** if the first device does not exhibit a reaction again, the first device is removed from the vehicle communications network (5) as the troubleshooting measure by the entry for the first device in the database (38) being marked as removed and, if appropriate, a signal being transmitted to the first device in order to switch it off.

3. Method according to Claim 1 or 2, **characterized in that** if the first device transmits a fault code as the reaction to the test signal, the second device or the further device executes, as the troubleshooting measure, a restart of the first device and, if appropriate, of all the other devices connected to the vehicle communications network (5), and **in that** the first device is switched off if the first device continues to transmit the fault code as the reaction to the test signal after the resetting process.

4. Method according to Claim 2 or 3, **characterized in that** if the first device is switched off, a bus manager (1) of the vehicle communications network (5) communicates the switching off of the first device to the other devices of the vehicle communications network (5).

5. Method according to Claim 4, **characterized in that** the bus manager (1) is installed on a device which is connected to the vehicle communications network (5).

6. Method according to one of the preceding claims, **characterized in that** the devices which are connected to the vehicle communications network (5) are classified **in that** each device is assigned a security level which respectively controls the access to other devices.

7. System for treating a defective device in a vehicle communications network (5), devices being connected to the vehicle communications network and the devices being capable of being controlled by device-specific drivers which are stored in a database (38) which is connected to the vehicle communications network (5), **characterized in that** the system is designed to load an expanded device-specific driver with diagnostic functions for the first device from the database (38) from the second device or a further device, in the event of the first device reacting incorrectly to a signal transmitted by a second device, this expanded device-specific driver being designed to transmit a test signal to the first device via the vehicle communications network (5), and **in that** the system is designed to initiate, if appropriate, a troubleshooting measure as a function of the reaction to the test signal.

## Revendications

1. Procédé de traitement d'un appareil défectueux dans un réseau de communication de véhicule (5), des appareils raccordés au réseau de communication (5) étant commandés au moyen de pilotes spécifiques aux appareils, les pilotes spécifiques aux appareils étant stockés dans une base de données (38) raccordée au réseau de communication de véhicule (5),
**caractérisé en ce que**
si un premier appareil réagit de manière défectueuse à un signal envoyé par un deuxième appareil, on charge à partir de la base de données (38) un pilote spécifique aux appareils élargi, du deuxième appareil ou d'un autre appareil, muni de fonctions de diagnostic pour le premier appareil, on envoie au moyen du pilote spécifique aux appareils élargi, un signal de test au premier appareil par le réseau de communication de véhicule (5), et en fonction de la réaction au signal de test, le cas échéant on prend une mesure de réparation de l'erreur.

2. Procédé selon la revendication 1,
**caractérisé en ce que**
si le premier appareil ne répond pas au signal de test, on renvoie un signal de test au moins une fois et si le premier appareil ne montre toujours aucune réaction, la mesure de réparation de l'erreur consiste à éloigner le premier appareil du réseau de communication de véhicule (5) en marquant l'entrée pour le premier appareil dans la base de données (38) comme éloignée et le cas échéant en envoyant un signal au premier appareil afin de le désactiver.

3. Procédé selon la revendication 1 ou 2,
**caractérisé en ce que**
si le premier appareil envoie un code d'erreur en tant que réaction au signal de test, un redémarrage du premier appareil et le cas échéant de tous les autres appareils raccordés au réseau de communication de véhicule (5) est réalisé par le deuxième ou l'autre appareil en tant que mesure de réparation de l'erreur, et si le premier appareil, après la réinitialisation, envoie toujours le code d'erreur en tant que réaction au signal de test, le premier appareil est désactivé.

4. Procédé selon la revendication 2 ou 3,
**caractérisé en ce que**
si le premier appareil est désactivé, un gestionnaire de bus (1) du réseau de communication de véhicule (5) indique la désactivation du premier appareil aux autres appareils du réseau de communication de véhicule (5).

5. Procédé selon la revendication 4,
**caractérisé en ce que**
le gestionnaire de bus (1) est installé sur un appareil raccordé au réseau de communication de véhicule (5).

6. Procédé selon l'une des revendications précédentes,
**caractérisé en ce que**
les appareils raccordés au réseau de communication de véhicule (5) sont classifiés, dans le sens où à chaque appareil est associé un niveau de sécurité qui régule respectivement l'accès à d'autres appareils.

7. Système de traitement d'un appareil défectueux dans un réseau de communication de véhicule (5), des appareils étant raccordés au réseau de communication de véhicule, les appareils pouvant être commandés par des pilotes spécifiques aux appareils stockés dans une base de données (38) raccordée au réseau de communication de véhicule (38),
**caractérisé en ce que**
le système est conçu, dans le cas où le premier appareil réagit de manière défectueuse à un signal envoyé par un deuxième appareil, pour charger un pilote spécifique aux appareils élargi, du deuxième ou d'un autre appareil, muni de fonctions de diagnostic pour le premier appareil, à partir de la base de données (38), ce pilote spécifique aux appareils élargi étant conçu pour envoyer un signal de test au premier appareil par le réseau de communication de véhicule (5) et le système est conçu pour mettre en oeuvre, le cas échéant, en fonction de la réaction au signal de test, une mesure de réparation de l'erreur.
